(19) Europäisches Patentamt
European Patent Office
Office européen des brevets

(11) **EP 3 714 077 B1**

(12) **EUROPÄISCHE PATENTSCHRIFT**

(45) Veröffentlichungstag und Bekanntmachung des Hinweises auf die Patenterteilung:
**24.01.2024  Patentblatt 2024/04**

(21) Anmeldenummer: **18812082.8**

(22) Anmeldetag: **20.11.2018**

(51) Internationale Patentklassifikation (IPC):
**C22C 21/00** *(2006.01)*      **B22D 43/00** *(2006.01)*
**H01M 4/13** *(2010.01)*

(52) Gemeinsame Patentklassifikation (CPC):
**C22C 21/00; B22D 7/005; B22D 21/007;**
**H01M 4/13;** Y02E 60/10

(86) Internationale Anmeldenummer:
**PCT/EP2018/081890**

(87) Internationale Veröffentlichungsnummer:
**WO 2019/101723 (31.05.2019 Gazette 2019/22)**

(54) **BATTERIEELEKTRODENFOLIE FÜR DIE HERSTELLUNG VON LITHIUM-IONEN-AKKUMULATOREN**

BATTERY ELECTRODE FOIL FOR THE PRODUCTION OF LITHIUM-ION ACCUMULATORS

FEUILLE D'ÉLECTRODE DE BATTERIE POUR LA FABRICATION D'ACCUMULATEURS LITHIUM-ION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2017  DE 102017127436**

(43) Veröffentlichungstag der Anmeldung:
**30.09.2020  Patentblatt 2020/40**

(73) Patentinhaber: **Speira GmbH**
**41515 Grevenbroich (DE)**

(72) Erfinder:
• **LAPTYEVA, Galyna**
**53347 Alfter (DE)**
• **HAMPEL, Ulrich**
**41516 Grevenbroich (DE)**
• **DENKMANN, Volker**
**47906 Kempen (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**CN-A- 101 671 786      CN-A- 105 063 520**
**CN-A- 106 929 713      DE-T5-112013 005 208**
**DE-T5-112013 005 772**

**Beschreibung**

### GEBIET DER ERFINDUNG

Die Erfindung betrifft eine Batterieelektrodenfolie umfassend eine Aluminiumlegierung, wobei die Aluminiumlegierung die folgende Zusammensetzung in Gew.-% aufweist: Si:0,01 - 0,15 Gew.-%, Fe: 0,02 - 0,4 Gew.-%, Cu: $\leq$ 0,08 Gew.-%, Mn: $\leq$ 0,03 Gew.-%, Mg: $\leq$ 0,03 Gew.-%, Cr: $\leq$ 0,01 Gew.-%, Ti: 0,005 - 0,03 Gew.-%, wobei die Aluminiumlegierung Verunreinigungen jeweils bis maximal 0,05 %, insgesamt bis maximal 0,15 % aufweisen kann, wobei die verbleibenden Gew. % Aluminium sind, wobei der Anteil an Aluminium jedoch mindestens 99,35 Gew.-% sein muss; wobei die Batterieelektrodenfolie intermetallische Phasen einer Durchmesserlänge von 0,1 bis 1,0 $\mu$m mit einer Dichte von mindestens 100 Partikeln/mm$^2$ und einer Dichte $\leq$ 9500 Partikeln/mm$^2$ aufweist, und wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

### TECHNOLOGISCHER HINTERGRUND

Lithium-Ionen-Akkumulatoren bestehen im Kern aus abwechselnd übereinander angeordneten Anoden- und Kathodenschichten, die durch Separatorschichten voneinander getrennt sind. Für die Kathodenschichten wird typischerweise mit Li-haltiger Elektrodenpaste beschichtete Aluminiumfolie verwendet. Bei der Anodenschicht kann es sich zum Beispiel um mit Graphit beschichtete Kupferfolie und bei der Separatorschicht um eine für Li-Ionen durchlässige Polymerschicht handeln.

Die Aluminiumfolie dient bei der Kathodenschicht einerseits als Träger bzw. Substrat für die Elektrodenpaste und andererseits zur Ableitung des Stroms, d.h. als sogenannter Stromableiter.

CN 106929713A beschreibt eine Technologie zur Herstellung einer Aluminiumfolie aus der Legierung 1070A mit ultrahoher Festigkeit und hoher Dehnung für eine Lithiumbatterie.

CN 105 063 520 A bezieht sich auf eine Glühbehandlung einer Aluminiumfolie für Lithiumbatterien.

Vor diesem Hintergrund liegt der vorliegenden Erfindung die Aufgabe zugrunde, eine Batterieelektrodenfolie mit guter bzw. hoher Leitfähigkeit in möglichst geringer Dicke mit zwei annähernd gleichen Oberflächen zur Verfügung zu stellen.

### ZUSAMMENFASSUNG DER ERFINDUNG

Zur Lösung dieser Aufgabe wird eine Batterieelektrodenfolie umfassend eine Aluminiumlegierung bereitgestellt, wobei die Aluminiumlegierung die folgende Zusammensetzung in Gew.-% aufweist:

| | |
|---|---|
| Si: | 0,01 - 0,15 Gew.-%, |
| Fe: | 0,02 - 0,4 Gew.-%, |
| Cu: | $\leq$ 0,08 Gew.-% |
| Mn: | $\leq$ 0,03 Gew.-%, |
| Mg: | $\leq$ 0,03 Gew.-%, |
| Cr: | $\leq$ 0,01 Gew.-% |
| Ti: | 0,005 - 0,03 Gew.-% |

wobei die Aluminiumlegierung Verunreinigungen jeweils bis maximal 0,05 %, insgesamt bis maximal 0,15 % aufweisen kann,
wobei die verbleibenden Gew. % Aluminium sind,
wobei der Anteil an Aluminium jedoch mindestens 99,35 Gew.-% sein muss;
wobei die Batterieelektrodenfolie intermetallische Phasen einer Durchmesserlänge von 0,1 bis 1,0 $\mu$m mit einer Dichte von mindestens 100 Partikeln/mm$^2$ und einer Dichte $\leq$ 9500 Partikeln/mm$^2$ aufweist, und wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

Die Erfinder erkannten, dass durch die an die spezifische Legierungszusammensetzung angepasste Verarbeitung der oben genannten Aluminiumlegierung eine Aluminiumfolie bereitgestellt werden kann, die durch eine geringe Dichte der Phase einer Durchmesserlänge von 0,1 bis 1,0 $\mu$m von mindestens 100 Partikeln/mm$^2$ und einer Dichte $\leq$ 9500 Partikeln/mm$^2$ gekennzeichnet ist und eine gute bzw. hohe elektrische Leifähigkeit aufweist, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

Bevorzugten Ausführungsformen beziehen sich auf Batterieelektrodenfolie deren intermetallische Phasen einer Durchmesserlänge von 0,1 bis 1,0 μm mit einer Dichte von mindestens 100 Partikeln/mm² und einer Dichte ≤ 7000 Partikeln/mm² aufweisen, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

Die erfindungsgemäßen Batterieelektrodenfolien zeichnen sich daher insbesondere durch eine gute bzw. hohe elektrische Leitfähigkeit und bei gleichzeitiger guter bzw. hoher mechanischer Belastbarkeit aus. Die Batterieelektrodenfolie kann eine elektrische Mindestleitfähigkeit von > 56 % IACS, insbesondere von ungefähr 56 % bis 63 % IACS aufweisen. Ferner kann die Batterieelektrodenfolie kann eine Zugfestigkeit (in Walzrichtung und quer zur Walzrichtung) Rm > 165 MPa aufweisen.

Typischerweise zeigt die Batterieelektrodenfolie eine Oberflächenrauhigkeit Ra von 0,07 bis 0,22 μm auf beiden Seiten. Bevorzugt beträgt der Unterschied der Oberflächenrauhigkeit Ra auf beiden Seiten der Batterieelektrodenfolie maximal 0,03 μm.

Insbesondere weist die Batterieelektrodenfolie eine Kohlenstoffbelegung von < 5 mg/m² auf.

In einigen Ausführungsformen liegt die Oberflächenspannung der Batterieelektrodenfolie bei > 30 dyn/cm, wie z.B. > 32 dyn/cm.

Üblicherweise weist die Batterieelektrodenfolie eine Dicke von 8 bis 20 μm, vorzugsweise von 12 μm auf.

Die Batterieelektrodenfolie, insbesondere bei einer Dicke von 12 μm, kann die folgende mechanische Eigenschaften zeigen:

| | |
|---|---|
| Rm (in Walzrichtung): | ≥ 165 MPa, |
| Rm (quer zur Walzrichtung): | ≥ 165 MPa, |
| Rp0.2 (in Walzrichtung): | ≥ 110 MPa, |
| A100 (in Walzrichtung): | ≥ 1,0%. |

Ein weiterer Aspekt der vorliegenden Offenbarung betrifft ein Verfahren zur Herstellung einer Batterieelektrodenfolie (12, 22),

- bei dem ein Aluminiumwarmband (8) mit einer Warmbanddicke von mindestens 2,5 mm aus einer Aluminiumlegierung wie in Anspruch 1 beschrieben, bereitgestellt wird und
- bei dem das Aluminiumwarmband (8) in mehreren Kaltwalzstichen (K1, Kx, Kx+1, Ky, Ky+1, Kn) auf eine Enddicke von 8 bis 20 μm kaltgewalzt wird,

    wobei das Kaltwalzen ab einer Ausgangsdicke von mindestens 1mm ohne Zwischenglühen erfolgt, wobei die Batterieelektrodenfolie intermetallische Phasen einer Durchmesserlänge von 0,1 bis 1,0 μm mit einer Dichte von mindestens 100 Partikeln/mm² und einer Dichte von ≤ 9500 Partikeln/mm² aufweist, und
    wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

Typischerweise wird das Kaltwalzen von Warmbanddicke auf Enddicke ohne Zwischenglühen durchgeführt.

Die Erfinder erkannten, dass die Verarbeitung der oben beschriebenen Aluminiumlegierung durch ein Verfahren das kein kontinuierliches Stranggussverfahren (continous casting) ist, insbesondere durch das oben beschriebene Verfahren, Aluminiumfolien, insbesondere Batterieelektrodenfolien, mit einer guten bzw. hohen mechanischen Belastbarkeit und einer guten bzw. hohen Leitfähigkeit hergestellt werden können.

Insbesondere wird im Verfahren auf eine Enddicke von 8 bis höchstens 20 μm, vorzugsweise von 12 μm kaltgewalzt.

In einigen Ausführungsformen beträgt der Abwalzgrad pro Kaltwalzstich ab einer Ausgangsdicke von zumindest 0,55 mm, vorzugsweise von zumindest 1,5 mm, höchstens 60%.

In besonderen Ausführungsformen des Verfahrens wird das Aluminiumband ab einer Dicke von zumindest 0,1 mm, vorzugsweise von zumindest 0,2 mm, zwischen zwei Kaltwalzstichen abgekühlt, insbesondere auf eine Temperatur von höchstens 50 °C.

Das Aluminiumband kann bis auf Enddicke einlagig kaltgewalzt werden.

Folglich bezieht sich ein weiterer Aspekt der vorliegenden Offenbarung auf eine Batterieelektrodenfolie, die nach dem hier beschriebenen Verfahren gefertigt ist.

Ein weiterer Aspekt der Erfindung bezieht sich auf die Verwendung einer Batterieelektrodenfolie als Stromableiterfolie, insbesondere zur Herstellung eines Akkumulators, insbesondere eines Lithium-Ionen-Akkumulators.

Ein anderer Aspekt der Erfindung bezieht sich auf einen Akkumulator, insbesondere Lithium-Ionen-Akkumulator, mit einem Stromableiter aus einer Batterieelektrodenfolie der Erfindung.

**BESCHREIBUNG DER ZEICHNUNGEN**

**Abbildung 1** Erstes Ausführungsbeispiel eines Verfahrens zur Herstellung einer erfindungsgemäßen Batterieelektrodenfolie

**Abbildung 2** Zweites Ausführungsbeispiel eines Verfahrens zur Herstellung einer erfindungsgemäßen Batterieelektrodenfolie

**Abbildung 3** Ausschnitt eines Verfahrens zur Herstellung von Lithium-Ionen-Akkumulatoren

**Abbildung 4a-b** Schematische Darstellung des Schichtenaufbaus eines Lithium-Ionen-Akkumulators in Flachbauweise

**BESCHREIBUNG BEVORZUGTER AUSFÜHRUNGSFORMEN**

Es sei darauf hingewiesen, dass "umfassend" keine anderen Elemente oder Schritte ausschließt und "eine" oder "ein" keine Vielzahl ausschließt.

Es wurde festgestellt, dass sich aus der Aluminiumlegierung durch die beschriebene Verarbeitung Aluminiumfolie herstellen lassen, die durch eine geringe Dichte an Phasen mit einer Durchmesserlänge von 01, bis 1,0 $\mu$m gekennzeichnet sind und eine hohe Leitfähigkeit aufweisen. Dadurch eignen sich diese Aluminiumfolien besonders als Batterieelektrodenfolien zur Herstellung von Akkumulatoren, insbesondere Lithium-Ionen-Akkumulatoren.

Die Aluminiumlegierung weist einen Siliziumgehalt von 0,01 bis 0,15 Gew.-% und einen Eisenanteil von 0,02 bis 0,4 Gew.-% auf. Diese Bereiche haben sich als geeignet für die gewünschten Eigenschaften einer aus der Aluminiumlegierung hergestellten Aluminiumfolie herausgestellt.

Die Aluminiumlegierung weist weiterhin einen Kupfergehalt von < 0,08 Gew.-%, einen Mangangehalt von < 0,03 Gew.-%, einen Magnesiumgehalt von $\leq$ 0,03 Gew.-%, einen Chromgehalt von $\leq$ 0,01 Gew.-% und einen Titangehalt von 0,005 bis 0,03 Gew.-% auf. Es wurde festgestellt, dass durch die genaue gemeinsame Einstellung der Elemente Cu, Ti, Mn, Mg und Cr in den jeweils angegebenen Bereichen eine niedrig legierte Aluminiumlegierung erreicht wird, die sich gleichwohl gut durch Kaltumformung, insbesondere durch Folienwalzen, verfestigen lässt.

Darüber hinaus bleiben Cu und Mn, aber auch Si aufgrund deren Löslichkeitsgrenzen größtenteils in der Lösung, d.h. in der Aluminium-Matrix, und üben eine rücktreibende Kraft auf statische und dynamische Erholung aus. Das ermöglicht mit den angegebenen Gehalten für Cu, Mn und Si eine kontinuierliche Festigkeitssteigerung durch Kaltverfestigung. Weiterhin führt die beschriebene Zusammensetzung zu einer besseren Thermostabilität der Aluminiumfolie, da die Entfestigung der Aluminiumfolie bei Wärmebehandlung durch die gelösten Elemente gehemmt wird.

Die oben genannte Aufgabe wird weiterhin gelöst durch ein Verfahren zur Herstellung einer Batterieelektrodenfolie, bei dem ein Aluminiumwarmband mit einer Warmbanddicke von mindestens 3 mm aus der zuvor beschriebenen Aluminiumlegierung bereitgestellt wird und bei dem das Aluminiumwarmband in mehreren Kaltwalzstichen auf eine Enddicke von minimal 8 und höchstens 20 $\mu$m kaltgewalzt wird, wobei das Kaltwalzen ab einer Ausgangsdicke ohne Zwischenglühen erfolgt.

Durch das Folienwalzen ohne Zwischenglühen der erfindungsgemäßen Legierung wird eine höhere Festigkeit in Kombination mit einer guten elektrischen Leitfähigkeit erreicht. Die Phasenanalyse zeigt, dass diese Ausführung eine geringe Dichte von Phasen einer Durchmesserlänge von 0,1 bis 1,0 $\mu$m aufweisen.

Daher ist ein Hauptaspekt der Erfindung ist die Bereitstellung einer Batterieelektrodenfolie umfassend eine Aluminiumlegierung,

wobei die Aluminiumlegierung die folgende Zusammensetzung in Gew.-% aufweist:

| | |
|---|---|
| Si: | 0,01 - 0,15 Gew.-%, |
| Fe: | 0,02 - 0,4 Gew.-%, |
| Cu: | $\leq$ 0,08 Gew.-% |
| Mn: | $\leq$ 0,03 Gew.-%, |
| Mg: | $\leq$ 0,03 Gew.-%, |
| Cr: | $\leq$ 0,01 Gew.-% |
| Ti: | 0,005 - 0,03 Gew.-% |

wobei die Aluminiumlegierung Verunreinigungen jeweils bis maximal 0,05 %, insgesamt bis maximal 0,15 % aufweisen kann,

wobei die verbleibenden Gew. % Aluminium sind,

wobei der Anteil an Aluminium jedoch mindestens 99,35 Gew.-% sein muss;

wobei die Batterieelektrodenfolie intermetallische Phasen einer Durchmesserlänge von 0,1 bis 1,0 $\mu$m mit einer Dichte von mindestens 100 Partikeln/mm$^2$ und einer Dichte $\leq$ 9500 Partikeln/mm$^2$ aufweist, und wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

Die hier angegebenen Durchmesserlängen, beziehen sich auf die maximalen Durchmesserlängen der Partikel. Die Partikel werden in den Rasterelektronenmikroskopaufnahmen als zweidimensionale Partikel dargestellt. Der längste zu detektierende Durchmesser dieser zweidimensionalen Darstellung gibt die maximale Durchmesserlänge wieder.

Der Fachmann ist mit Verfahren zur Bestimmung der Durchmesserlänge der intermetallische Phasen vertraut. Beispielsweise können die Durchmesserlänge mit Hilfe eines Feldemissionsrasterelektronenmikroskop (Zeiss Merlin) mit B2D4-Detektor (pneumatisch betriebener Detektor für Feldemissions-Rastereletronenmikroskop) bei einer Vergrößerung von 1000:1 und einer Beschleunigungsspannung von 10kV gemessen werden.

Eine weitere Ausführungsform bezieht sich auf eine Batterieelektrodenfolie umfassend eine Aluminiumlegierung,

wobei die Aluminiumlegierung die folgende Zusammensetzung in Gew.-% aufweist:

| | |
|---|---|
| Si: | $\leq$ 0,10 Gew.-%, |
| Fe: | $\leq$ 0,12 Gew.-%, |
| Cu: | $\leq$ 0,03 Gew.-% |
| Mn: | $\leq$ 0,02 Gew.-%, |
| Mg: | $\leq$ 0,02 Gew.-%, |
| Zn: | $\leq$ 0,03 Gew.-% |
| Ti: | 0,017 - 0,020 Gew.-% |

wobei die Aluminiumlegierung Verunreinigungen jeweils bis maximal 0,01 %, insgesamt bis maximal 0,15 % aufweisen kann,

wobei die verbleibenden Gew. % Aluminium sind,

wobei der Anteil an Aluminium jedoch mindestens 99,80 Gew.-% sein muss;

wobei die Batterieelektrodenfolie intermetallische Phasen einer Durchmesserlänge von 0,1 bis 1,0 $\mu$m mit einer Dichte von mindestens 100 Partikeln/mm$^2$ und einer Dichte $\leq$ 7000 Partikeln/mm$^2$ aufweist, und wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird; Insbesondere kann eine derartige Batterieelektrodenfolie mit einer Banddicke von $\leq$ 20 $\mu$m intermetallische Phasen einer Durchmesserlänge von 0,1 bis 1,0 $\mu$m mit einer Dichte von mindestens 100 Partikeln/mm$^2$ und einer Dichte $\leq$ 7000 Partikeln/mm$^2$ aufweisen, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird; Insbesondere kann eine derartige Batterieelektrodenfolie mit einer Banddicke von $\leq$ 12 $\mu$m intermetallische Phasen einer Durchmesserlänge von 0,1 bis 1,0 $\mu$m mit einer Dichte von mindestens 100 Partikeln/mm$^2$ und einer Dichte $\leq$ 4000 Partikeln/mm$^2$ aufweisen, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird; Insbesondere kann eine derartige Batterieelektrodenfolie mit einer Banddicke von $\leq$ 20 $\mu$m intermetallische Phasen einer Durchmesserlänge von 0,1 bis 1,0 $\mu$m mit einer Dichte von mindestens 100 Partikeln/mm$^2$ und einer Dichte $\leq$ 4000 Partikeln/mm$^2$ aufweisen , wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird; Insbesondere kann eine derartige Batterieelektrodenfolie mit einer Banddicke von $\leq$ 12 $\mu$m intermetallische Phasen einer Durchmesserlänge von 0,1 bis 1,0 $\mu$m mit einer Dichte von mindestens 100 Partikeln/mm$^2$ und einer Dichte $\leq$ 2000 Partikeln/mm$^2$ aufweisen, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

Eine weitere Ausführungsform bezieht sich auf eine Batterieelektrodenfolie umfassend eine Aluminiumlegierung,

wobei die Aluminiumlegierung die folgende Zusammensetzung in Gew.-% aufweist:

| Si: | 0,1 - 0,15 Gew.-%, |
|---|---|
| Fe: | 0,3 - 0,4 Gew.-%, |
| Cu: | ≤ 0,05 Gew.-% |
| Mn: | ≤ 0,01 Gew.-%, |
| Mg: | ≤ 0,0029 Gew.-%, |
| Cr: | ≤ 0,01 |
| Zn: | ≤ 0,05 Gew.-% |
| Ti: | ≤ 0,03 Gew.-% |

wobei die Aluminiumlegierung Verunreinigungen jeweils bis maximal 0,015 %, insgesamt bis maximal 0,05 % aufweisen kann,

wobei die verbleibenden Gew. % Aluminium sind,

wobei der Anteil an Aluminium jedoch mindestens 99,35 Gew.-% sein muss;

wobei die Batterieelektrodenfolie intermetallische Phasen einer Durchmesserlänge von 0,1 bis 1,0 $\mu$m mit einer Dichte von mindestens 100 Partikeln/mm$^2$ und einer Dichte ≤ 7000 Partikeln/mm$^2$ aufweist, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird; Insbesondere kann eine derartige Batterieelektrodenfolie mit einer Banddicke von ≤ 9 $\mu$m intermetallische Phasen einer Durchmesserlänge von 0,1 bis 1,0 $\mu$m mit einer Dichte von mindestens 100 Partikeln/mm$^2$ und einer Dichte ≤ 1000 Partikeln/mm$^2$ aufweisen, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird; Insbesondere kann eine derartige Batterieelektrodenfolie mit einer Banddicke von ≤ 9 $\mu$m intermetallische Phasen einer Durchmesserlänge von 0,1 bis 1,0 $\mu$m mit einer Dichte von mindestens 100 Partikeln/mm$^2$ und einer Dichte ≤ 1000 Partikeln/mm$^2$ aufweisen, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird; Insbesondere kann eine derartige Batterieelektrodenfolie mit einer Banddicke von ≤ 9 $\mu$m intermetallische Phasen einer Durchmesserlänge von 0,1 bis 1,0 $\mu$m mit einer Dichte einer Dichte von mindestens 100 Partikeln/mm$^2$ und ≤ 600 Partikeln/mm$^2$ aufweisen, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

Typischer Weise weist die Batterieelektrodenfolie intermetallische Phase einer Durchmesserlänge von 0,1 bis 1,0 $\mu$m mit einer Dichte von mindestens 100 Partikeln/mm$^2$, mindestens 1000 Partikeln/mm$^2$, und einer Dichte ≤ 9500 Partikeln/mm$^2$ auf, wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

In besonderen Ausführungsformen weist die Batterieelektrodenfolie intermetallische Phase einer Durchmesserlänge von ≥ 1,0 $\mu$m mit einer Dichte von mindestens 2000 Partikeln/mm$^2$ auf. Insbesondere kann eine Batterieelektrodenfolie mit einer Banddicke von ≤ 12 $\mu$m, intermetallische Phasen einer Durchmesserlänge von ≥ 1,0 $\mu$m mit einer Dichte von mindestens 3000 Partikeln/mm$^2$, bevorzugt mindestens 4000 Partikel/mm$^2$ aufweisen.

Insbesondere können, Batterieelektrodenfolie mit einer Banddicke von ≤ 15 $\mu$m, die intermetallische Phasen eine Durchmesserlänge von ≥ 1,0 $\mu$m einer Dichte von mindestens 3000 Partikeln/mm$^2$, bevorzugt mindestens 4000 Partikel/mm$^2$, aufweisen.

Die angegebenen Partikeldichten wurden bei einer Vergrößerung von 1000:1 und einer Beschleunigungsspannung von 10kV gemessen.

Es wurde festgestellt, dass sich ein Aluminiumband aus der zuvor beschriebenen Legierung durch Kaltwalzen von einer Dicke von mindestens 3 mm auf mindestens 8 und höchstens 20 $\mu$m so verfestigen lässt, gute Festigkeitswerte erreicht werden können. Die mit dem Verfahren hergestellte Aluminiumfolie weist demnach eine erhöhte Festigkeit bei guter bzw. hoher Leitfähigkeit auf.

Dadurch eignet sich die Aluminiumfolie besonders gut zur Herstellung von Akkumulatoren, insbesondere Lithium-Ionen-Akkumulatoren. Entsprechend wird die oben genannte Aufgabe erfindungsgemäß weiterhin gelöst durch die Verwendung der zuvor genannten Aluminiumlegierung zur Herstellung von Akkumulatoren, insbesondere Lithium-Ionen-Akkumulatoren sowie durch die Verwendung der zuvor beschriebenen Aluminiumfolie als Stromableiterfolie, insbesondere zur Herstellung eines Akkumulators, insbesondere eines Lithium-Ionen-Akkumulators. Darüber hinaus wird die zuvor genannte Aufgabe gelöst durch einen Akkumulator, insbesondere einen Lithium-Ionen-Akkumulator, mit einem Stromableiter aus der zuvor beschriebenen Aluminiumfolie.

Bei dem Verfahren wird ein Aluminiumwarmband mit einer Warmbanddicke von mindestens 3 mm aus der zuvor genannten Legierung bereitgestellt. Unter der Warmbanddicke wird die Dicke des Aluminiumbands verstanden, die am Ende des Warmwalzens erreicht ist. Das Aluminiumwarmband kann beispielsweise dadurch hergestellt werden, dass ein Barren aus einer Schmelze mit der zuvor genannten Legierungszusammensetzung gegossen und nach einer optionalen Homogenisierungsbehandlung auf eine Dicke von 3 mm oder mehr warmgewalzt wird. Die Warmbandtemperatur, d.h. die Temperatur des Warmbands unmittelbar nach dem letzten Warmbandstich, liegt typischerweise im Bereich zwischen 300 °C und 350° C, beispielsweise bei 330° C.

Das Aluminiumwarmband wird in mehreren Kaltwalzstichen auf eine Enddicke von 8 bis höchstens 20 $\mu$m kaltgewalzt. Die Anzahl der Kaltwalzstiche kann bedarfsgemäß eingestellt werden, beträgt vorzugsweise jedoch mindestens sieben.

Das Kaltwalzen erfolgt ab einer Ausgangsdicke von mindestens 1 mm, vorzugsweise mindestens 2 mm, insbesondere mindestens 3 mm, ohne Zwischenglühung. Das bedeutet, dass das Aluminiumband ab einer Dicke von mindestens 1 mm, vorzugsweise mindestens 2 mm, insbesondere mindestens 3 mm, zwischen zwei Kaltwalzstichen keiner Zwischenglühung (mehr) unterzogen wird. Vorzugsweise erfolgt bereits ab Warmbanddicke keine Zwischenglühung, d.h. das Kaltwalzen erfolgt vorzugsweise vollständig ohne Zwi schenglühungen.

Unter der Ausgangsdicke wird die Dicke des Aluminiumbands vor dem betreffenden Kaltwalzstich verstanden. Unter einem Stich wird das einmalige Walzen eines Bands verstanden.

Eine Zwischenglühung führt zu einer zumindest teilweisen Rekristallisierung des Aluminiumbands bzw. zu einer Reduzierung von Versetzungen und wirkt einer Materialverfestigung entgegen. Durch den Verzicht auf die Zwischenglühung ab einer bestimmten Ausgangsdicke kann durch die starke Umformung des Bands eine gute Verfestigung erreicht werden, so dass das Aluminiumband bzw. die Aluminiumfolie auf Enddicke gute Festigkeiten aufweist.

Im Folgenden werden verschiedene Ausführungsformen der Aluminiumlegierung, des Verfahrens, der Aluminiumfolie, dessen Verwendung und des Akkumulators beschrieben. Die einzelnen Ausführungsformen sind jeweils für die Aluminiumlegierung, das Verfahren, die Aluminiumfolie, dessen Verwendung und den Akkumulator anwendbar und können darüber hinaus auch untereinander kombiniert werden.

Bei einer weiteren Ausführungsform des Verfahrens liegt die Warmbanddicke im Bereich 3 - 5 mm. Mit einer Mindestdicke des Warmbands von 4 mm konnten beim nachfolgenden Kaltwalzen auf die angestrebte Enddicke gute Verfestigungen erreicht werden. Vorzugsweise erfolgt das Kaltwalzen ab Warmbanddicke ohne Zwischenglühen. Bei einer Warmbanddicke von mehr als 5 mm lässt sich das Warmband nur noch schlecht handhaben, insbesondere schlecht zu einem Coil aufwickeln.

Bei einer weiteren Ausführungsform erfolgt das Kaltwalzen von Warmbanddicke auf Enddicke ohne Zwischenglühen. Bei dieser Ausführungsform wird also grundsätzlich auf ein Zwischenglühen zwischen den Kaltwalzstichen verzichtet, unabhängig von der Ausgangsdicke. Auf diese Weise kann eine verbesserte Verfestigung des Aluminiumbands durch das Kaltwalzen erreicht werden.

Bei einer weiteren Ausführungsform wird auf eine Enddicke von 8 bis 20 $\mu$m, vorzugsweise höchstens 15 $\mu$m, insbesondere höchstens 10 bis 12 $\mu$m kaltgewalzt. Bei einer entsprechenden Ausführungsform der Aluminiumfolie weist diese eine Dicke von 8 bis 20 $\mu$m, vorzugsweise höchstens 15 $\mu$m, insbesondere höchstens 12 $\mu$m auf. Mit der zuvor beschriebenen Legierung lassen sich Aluminiumfolien mit geringer Dicke herstellen, die gleichwohl eine gute bzw. hohe Festigkeit aufweisen, so dass sie bei der Verarbeitung zu Akkumulatoren nicht reißen. Dadurch lassen sich Material und Gewicht einsparen sowie die Energiedichte der Akkumulatoren erhöhen.

Bei einer weiteren Ausführungsform beträgt der Abwalzgrad pro Kaltwalzstich ab einer Ausgangsdicke von zumindest 0,7 mm, vorzugsweise ab einer Ausgangsdicke von zumindest 1,5 mm höchstens 60 %. Der Abwalzgrad pro Kaltwalzstich wird demnach auf max. 60% begrenzt, bevor die Ausgangsdicke einen Wert von 0,7 mm bzw. bevorzugt von 1,5 mm unterschreitet.

Unter dem Abwalzgrad A eines Kaltwalzstichs wird die Dickenänderung durch den Kaltwalzstich, d.h. die Differenz zwischen der Banddicke nach dem Kaltwalzstich $d_{nach}$ und der Ausgangsdicke $d_{vor}$, im Verhältnis zur Ausgangsdicke $d_{vor}$, angegeben in Prozent, verstanden:

$$A = (d_{vor} - d_{nach})/d_{vor}$$

Wird das Band in einem Kaltwalzstich zum Beispiel von 200 $\mu$m auf 100 $\mu$m abgewalzt, so ergibt sich für den Abwalzgrad: A = (200$\mu$m - 100$\mu$m)/200$\mu$m = 0,5 = 50%.

Es wurde festgestellt, dass der durch die Kaltwalzumformung hervorgerufene Wärmeeintrag das Aluminiumband so stark erwärmen kann, dass eine nennenswerte Entfestigung eintritt. Durch die Begrenzung des Abwalzgrads auf höchstens 60 % ab einer Ausgangsdicke von zumindest 0,7 mm, vorzugsweise zumindest 1,5 mm, wird dies verhindert, so dass sich bessere Festigkeiten des Bands bei Enddicke erreichen lassen.

Bei einer weiteren Ausführungsform wird das Aluminiumband ab einer Dicke von zumindest 0,1 mm, vorzugsweise zumindest ab einer Dicke von zumindest 0,2 mm, zwischen zwei Kaltwalzstichen abgekühlt, insbesondere auf eine Temperatur von höchstens 50 °C. Auf diese Weise kann die durch die Kaltwalzumformung in das Band eingebrachte Wärmeenergie zwischen den einzelnen Kaltwalzstichen abgegeben werden, so dass die Temperatur des Aluminiumbands nicht über mehrere Kaltwalzstiche übermäßig ansteigt, was zu einer Entfestigung des Bands führen würde. Dadurch sind höhere Festigkeiten bei Enddicke erreichbar. Da der Wärmeanstieg pro Kaltwalzstich besonders bei dünneren Banddicken kritisch ist, wird bei der Ausführungsform des Verfahrens mit dem Abkühlschritt zwischen zwei Kaltwalzstichen begonnen, bevor die Ausgangsdicke einen Wert von 0,7 mm, vorzugsweise 1,5 mm unterschreitet.

Zur Abkühlung des Aluminiumbands kann dieses zwischen zwei Kaltwalzstichen beispielsweise für mindestens 24 Stunden gelagert werden, vorzugsweise bei Raumtemperatur. Dadurch lässt sich ein Abkühlen des Bands von typischerweise 80 °C bis 100 °C unmittelbar nach einem Kaltwalzstich auf höchstens 50 °C erreichen.

Bei einer weiteren Ausführungsform wird das Aluminiumband bis auf Enddicke einlagig kaltgewalzt. Das Aluminiumband wird demnach auch bei dünnen Ausgangsdicken nicht gedoppelt, wie es sonst bei der Herstellung von Aluminiumfolie üblich ist. Durch das einlagige Walzen bis auf Enddicke weist die Aluminiumfolie beidseitig eine ähnliche Beschaffenheit auf, insbesondere vergleichbare Rauheiten, was sich positiv auf die gleichmäßige Beschichtbarkeit der Aluminiumfolie auswirkt.

Darüber hinaus kann durch das einlagige Walzen auf Enddicke gegenüber doppelt gewalzten Aluminiumfolien die erforderliche Menge an Walzöl reduziert werden, da für das doppellagige Walzen eine erhebliche Menge Walzöl zwischen die beiden Aluminiumlagen aufgebracht werden muss, um diese nach dem Walzen voneinander trennen zu können. Durch das einlagige Walzen lassen sich damit organische Verunreinigungen auf der Bandoberfläche reduzieren, vorzugsweise auf eine Restwalzölbelegung von maximal 5 mg Kohlenstoff pro Quadratmeter, was sich als vorteilhaft bei der Verwendung der Aluminiumfolie zur Herstellung von Lithium-Ionen-Akkumulatoren herausgestellt hat.

Bei einer weiteren Ausführungsform weist die Aluminiumfolie, insbesondere bei einer Dicke von maximal 12 $\mu$m, folgende mechanische Eigenschaften auf, insbesondere im walzharten Zustand:

| | |
|---|---|
| Rm (in Walzrichtung): | $\geq$ 165 MPa, |
| Rm (quer zur Walzrichtung): | $\geq$ 165 MPa, |
| Rp0.2 (in Walzrichtung): | $\geq$ 110 MPa, |
| A100 (in Walzrichtung): | $\geq$ 1,0%. |

Rm ist die Zugfestigkeit, Rp0,2 die 0,2 %-Dehngrenze und A100 die Bruchdehnung (mit Probenlänge 100mm), jeweils gemessen im Zugversuch nach DIN 50154:1980-12 und DIN EN 546-2:2007-03.

Der Zusatz "in Walzrichtung" bedeutet, dass je eine Zugprobe mit der Probenlänge in Walzrichtung zu verwenden ist, und der Zusatz "quer zur Walzrichtung" bedeutet, dass je eine Zugprobe mit der Probenlänge quer zur Walzrichtung zu verwenden ist.

Es wurde festgestellt, dass durch die Verwendung der zuvor beschriebenen Legierung und des zuvor beschriebenen Verfahrens eine Folie hergestellt werden kann, die die oben genannten mechanischen Eigenschaften aufweist.

Es wurde festgestellt, dass mit der beschriebenen Legierung eine hohe Thermostabilität der Aluminiumfolie erreicht werden kann, so dass die Aluminiumfolie auch nach einer solchen Wärmebehandlung gute mechanische Eigenschaften aufweist. Dies ist insbesondere vorteilhaft bei der Verwendung der Aluminiumfolie zur Herstellung von Lithium-Ionen-Akkumulatoren, da die Aluminiumfolie auch nach einem, der Beschichtung mit Lithiumhaltigem Elektrodenmaterial folgenden Trocknungsvorgang gute Festigkeitswerte aufweist.

Bei einer weiteren Ausführungsform weist die Aluminiumfolie auf beiden Seiten einen Rauheitswert Ra im Bereich von 0,07 bis 0,22 $\mu$m auf, gemessen nach DIN EN ISO 4287:2010 (mit einem stationären Rauheitsmessgerät Hommel-Tester T8000 RC). Vorzugsweise unterscheidet sich der Rauheitswert Ra auf einer Seite der Aluminiumfolie von dem Rauheitswert Ra auf der anderen Seite der Aluminiumfolie um maximal 0,03 $\mu$m. Dies kann insbesondere dadurch erreicht werden, dass die Aluminiumfolie einlagig auf Enddicke gewalzt wird. Auf diese Weise lässt sich die Aluminiumfolie gleichmäßiger beidseitig beschichten.

Bei einer weiteren Ausführungsform weist die Aluminiumfolie eine elektrische Leitfähigkeit $\geq$ 56 % IACS (International Annealed Copper Standard), bestimmt über eine Widerstandsmessung mittels einer Wheatstoneschen Messbrücke, auf. Auf diese Weise eignet sich die Aluminiumfolie gut für Stromableiter. In besonderen Ausführungsformen liegt die elektrische Leitfähigkeit bei 55 % bis 63 %.

Weitere Merkmale und Vorteile der vorliegenden Erfindung ergeben sich aus der nachfolgenden Beschreibung verschiedener Ausführungsbeispiele, wobei auf die beigefügte Zeichnung Bezug genommen wird.

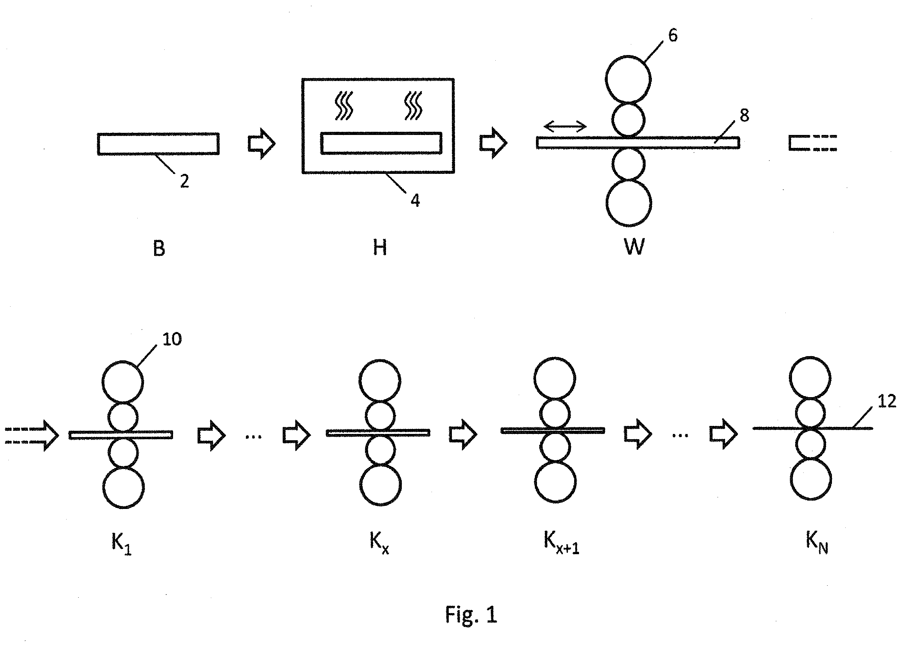

Figur 1 zeigt ein erstes Ausführungsbeispiel des Verfahrens zur Herstellung einer erfindungsgemäßen Batterieelektrodenfolie.

Bei dem Verfahren wird zunächst im Schritt B ein Barren 2 mit folgender Zusammensetzung gegossen:

| | |
|---|---|
| Si: | 0,07 - 0,12 Gew.-% |
| Fe: | 0,18 - 0,24 Gew.-% |
| Cu: | 0,03 - 0,08 Gew.-% |
| Mn: | 0,015 - 0,025 Gew.-% |
| Zn: | $\leq$ 0,01 Gew.-% |
| Ti: | 0,015 - 0,025 Gew.-% |
| Al: | Rest, mindestens jedoch 99,5 Gew.-%, |

unvermeidliche Verunreinigungen einzeln $\leq$ 0,01 Gew.-%, in Summe $\leq$ 0,03 Gew.-%.

Der Barren kann anschließend einer optionalen Homogenisierungsbehandlung in einem Homogenisierungsofen 4 unterzogen werden (Schritt H). Nach der Homogenisierungsbehandlung wird der Barren in einem reversierenden Warmwalzgerüst 6 (in Fig. 1 durch den Doppelpfeil verdeutlicht) zu einem Aluminiumwarmband 8 mit einer Warmbanddicke zwischen 3 und 5 mm warmgewalzt (Schritt W).

Nach dem Warmwalzen wird das Aluminiumwarmband 8 in einem Kaltwalzgerüst 10 in mehreren Kaltwalzstichen auf eine Enddicke von beispielsweise 15 $\mu$m kaltgewalzt. Figur 1 zeigt exemplarisch den ersten Kaltwalzstich (Schritt $K_1$), den letzten Kaltwalzstich (Schritt $K_N$, wobei "N" für die Gesamtzahl der Kaltwalzstiche steht) sowie zwei aufeinanderfolgende Kaltwalzstiche (Schritte $K_x$ und $K_{x+1}$) zwischen dem ersten und dem letzten Kaltwalzstich. Nach dem Kaltwalzstich $K_x$ weist das Aluminiumband eine Dicke von mindestens 1 mm auf. Die Ausgangsdicke für den Kaltwalzstich $K_{x+1}$ beträgt also 1 mm oder mehr. Der Kaltwalzstich $K_{x+1}$ folgt auf den Kaltwalzstich $K_x$, ohne dass eine Zwischenglühung des Aluminiumbands erfolgt. Ebenso folgen alle weiteren Kaltwalzstiche bis zum letzten Kaltwalzstich ohne Zwischenglühung aufeinander. Auf diese Weise wird über die einzelnen Kaltwalzstiche ab $K_x$ eine hohe Verfestigung der hergestellten Aluminiumfolie 12 erreicht, ohne dass es durch Zwischenglühungen zwischen den Kaltwalzstichen zu einer Entfestigung der Folie kommt. Vorzugsweise wird vollständig auf ein Zwischenglühen beim Kaltwalzen verzichtet. Zusätzlich wird der Abwalzgrad der einzelnen Kaltwalzstiche ab einer Ausgangsdicke von zumindest 1,5 mm auf maximal 60% begrenzt.

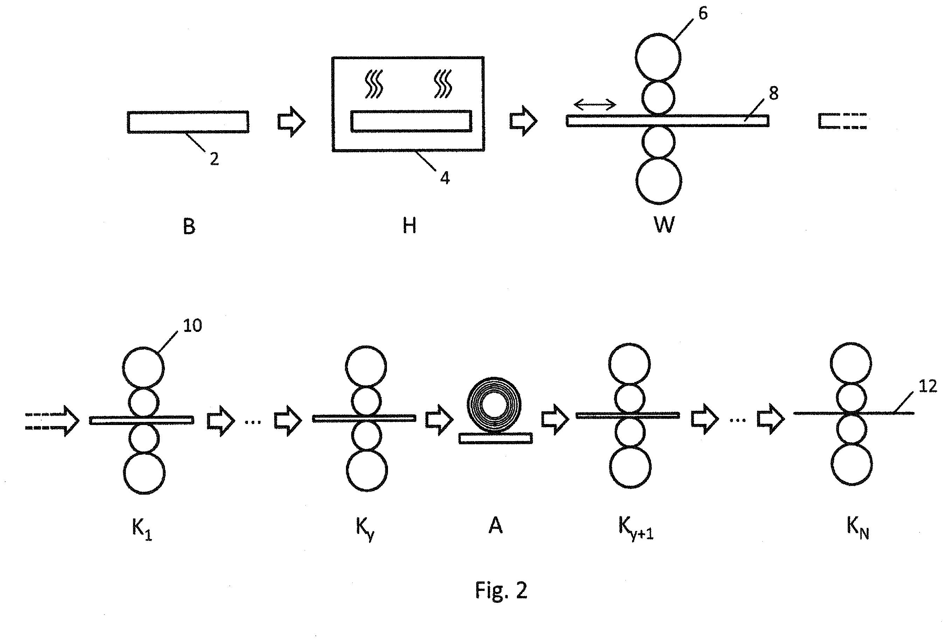

Figur 2 zeigt ein alternatives Ausführungsbeispiel des Verfahrens zur Herstellung einer erfindungsgemäßen Batterieelektrodenfolie, wobei gleiche Komponenten mit gleichen Bezugszeichen versehen sind. Wie beim Verfahren aus Fig. 1 erfolgt ab einer Ausgangsdicke von zumindest 1 mm kein Zwischenglühen und der Abwalzgrad ist ab einer Ausgangsdicke von zumindest 1,5 mm auf maximal 60% begrenzt. Das in Figur 2 gezeigte Ausführungsbeispiel unterscheidet sich dadurch von dem Ausführungsbeispiel aus Figur 1, dass zwischen den einzelnen Kaltwalzstichen ab einer Banddicke von 0,1 mm jeweils ein Abkühlschritt A vorgesehen ist (in Fig. 2 exemplarisch zwischen $K_y$ und $K_{y+1}$ illustriert).

Durch die beim Kaltwalzen in das Aluminiumband eingebrachte Umformenergie weist das Aluminiumband unmittelbar nach einem Kaltwalzstich typischerweise eine Temperatur im Bereich von 80 °C - 100 °C auf. Bei dem Abkühlschritt A wird das Band als Coil für einen Zeitraum von mindestens 24 h bei Raumtemperatur gelagert und kühlt dadurch langsam auf eine Temperatur von weniger als 50 °C ab. Dadurch werden eine übermäßige Erwärmung des Aluminiumbands über mehrere aufeinanderfolgende Kaltwalzstiche und eine damit verbundene Entfestigung des Aluminiumbands vermieden. Dadurch kann die Festigkeit der Aluminiumfolie 12 bei Enddicke erhöht werden.

Die mit dem zuvor beschriebenen Verfahren hergestellten Aluminiumfolien sind besonders für den Einsatz als Stromableiter bei der Herstellung von Lithium-Ionen-Akkumulatoren geeignet.

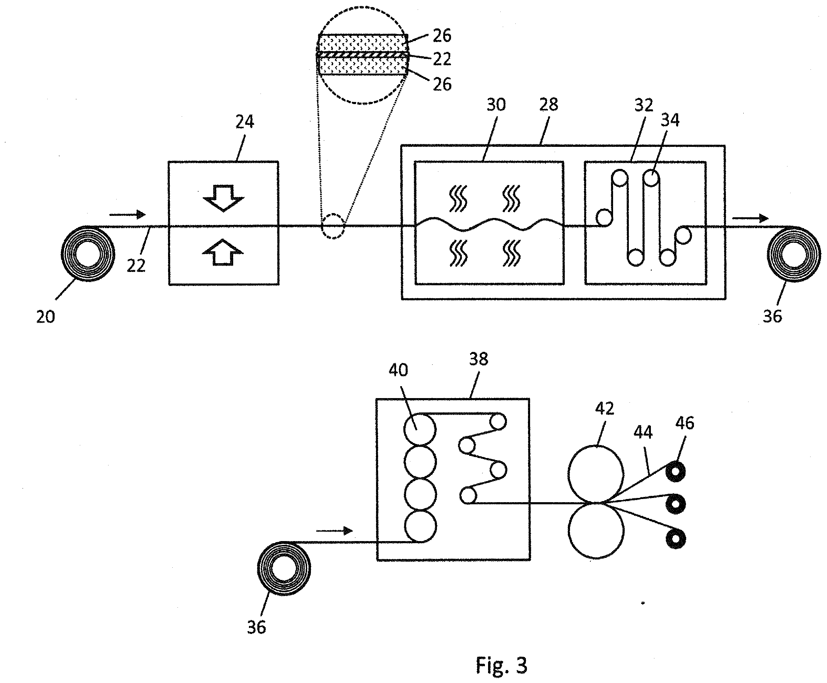

Figur 3 illustriert die Herstellung von Kathodenlagen für Lithium-Ionen-Akkumulatoren, aus der die mechanischen Anforderungen an die Aluminiumfolie 12 ersichtlich werden.

Bei dem Verfahren wird von einem Coil 20 eine Aluminiumfolie 22 abgewickelt, die als Träger des Elektrodenmaterials und Stromableiter dient. Die Aluminiumfolie 22 kann beispielsweise mit dem in Fig. 1 oder Fig. 2 dargestellten Verfahren hergestellt sein, z.B. kann es sich um Folie 12 handeln.

Die Aluminiumfolie 22 wird zunächst einer Beschichtungsvorrichtung 24 zugeführt, in der die Folienoberseite und die Folienunterseite mit einem Lithium-haltigen Elektrodenmaterial beschichtet werden, beispielsweise durch Schlitzdüsen-Beschichtung. Die auf die Aluminiumfolie aufgetragene Beschichtung 26 kann eine Schichtdicke von bis zu 150 $\mu$m aufweisen und damit ein Vielfaches der Dicke der Aluminiumfolie 22.

Die beschichtete Folie 22 wird dann einer Trocknungsvorrichtung 28 zugeführt, bei der die Folie zunächst in einem Schwebetrockner 30 getrocknet und anschließend in einer Kühlstrecke 32, zum Beispiel mit Kühlwalzen 34, wieder abgekühlt wird. Typischerweise erfolgt eine Trocknung im Schwebetrockner für 2 Minuten bei ca. 150 °C. Nach dem Abkühlen wird die Aluminiumfolie zu einem Coil 36 aufgewickelt.

Aufgrund der großen Auftragsmenge des Elektrodenmaterials auf die Aluminiumfolie ist eine gute bzw. hohe Festigkeit der Aluminiumfolie wünschenswert, damit diese insbesondere im Schwebetrockner 30 nicht reißt. Zudem soll die Aluminiumfolie eine ausreichende Thermostabilität aufweisen, damit die erforderlichen Festigkeiten auch noch nach der Trocknungsbehandlung, d.h. nach 2 min. bei 150°C vorliegen.

In einem zweiten Verfahrensabschnitt wird die beschichtete Aluminiumfolie 22 wieder von dem Coil 36 abgewickelt und durch eine Kalandereinrichtung 38 geführt, in der die beschichtete Aluminiumfolie 22 zwischen Kalanderrollen 40 gepresst wird, um eine vorgegebene gleichmäßige Dicke der Beschichtung 26 zu erhalten.

Anschließend wird die beschichtete Folie in einer Spaltvorrichtung 42 in schmalere Bänder 44 längsgeteilt und zu Coils 46 aufgewickelt. Die auf diese Weise hergestellten Bänder beschichteter Aluminiumfolie werden in folgenden, nicht dargestellten Schritten auf die gewünschte Geometrie geschnitten bzw. gestanzt und weiter zu Lithium-Ionen-Akkumulatoren verarbeitet, indem sie im Wechsel mit Anodenschichten und jeweils dazwischen angeordneten Separatorschichten übereinandergestapelt werden. Dies kann zur Herstellung von Lithium-Ionen-Akkumulatoren in Flachbauweise durch sukzessives Übereinanderstapeln der einzelnen Schichten erfolgen oder zur Herstellung von Lithium-Ionen-Akkumulatoren in Zylinderbauweise durch Aufwickeln eines Stapels aus je einer Kathoden- und Anodenschicht mit Separatorschichten.

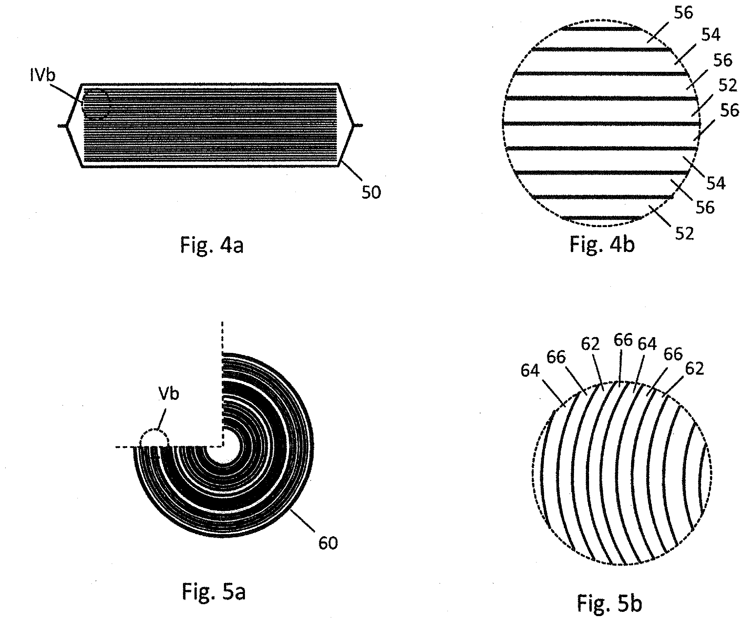

Die Fig. 4a-b zeigen schematisch den Schichtenaufbau eines Lithium-Ionen-Akkumulators 50 in Flachbauweise in Schnittdarstellung, wobei Fig. 4b ein vergrößertes Detail aus Figur 4a zeigt. Der Akkumulator 50 weist einen Stapel aus Kathodenlagen 52, Anodenlagen 54 und jeweils dazwischen angeordneten Separatorlagen 56 auf. Die Kathodenlagen 52 sind aus dem beschichteten Aluminiumband 44 aus Fig. 3 hergestellt.

Zu diesem Zweck wurden Walzbarren mit 45mm Dicke aus den in Tabelle 1 genannten Legierungen A, B und C gegossen, wobei A und B ein erfindungsgemäßes Ausführungsbeispiel der Legierung und C ein Vergleichsbeispiel darstellt.

Zusammensetzung Legierung A

Tabelle 1

| Element | Gew.-% |
|---------|--------|
| Si | 0,05 |
| Fe | 0,1 |
| Cu | 0 |
| Mn | 0 |
| Mg | 0 |
| Zn | 0,01 |
| Ti | 0,01 |
| Ga | 0,01 |
| V | 0,006 |
| Pb | 0,001 |
| Al | Rest |

Zusammensetzung Legierung B

Tabelle 2

| Element | Gew.-% |
|---------|--------|
| Si | 0,12 |
| Fe | 0,38 |
| Cu | 0 |
| Mn | 0,0057 |
| Mg | 0,0016 |

(fortgesetzt)

| Element | Gew.-% |
|---|---|
| Cr | 0 |
| Zn | 0,01 |
| Ti | 0,005 |
| B | 0,009 |
| Ca | 0,0001 |
| Na | 0,0004 |
| Pb | 0,0013 |
| V | 0,0064 |
| Ga | 0,0126 |
| Al | Rest |

Vergleichszusammensetzung Legierung C

Tabelle 3

| Element | Gew.-% |
|---|---|
| Si | 0,06 |
| Fe | 0,86 |
| Cu | 0 |
| Mn | 0,018 |
| Mg | 0,0008 |
| Cr | 0 |
| Ni | 0,004 |
| Ti | 0,009 |
| B | 0,0005 |
| Na | 0,0001 |
| Pb | 0,0013 |
| Sn | 0,0004 |
| V | 0,0068 |
| Ga | 0,0149 |
| Al | Rest |

Proben von Bändern einer Dicke von 9, 12μm und 20 μm wurde die Phasenanzahl der Phasen mit einer maximalen Durchmesserlänge von 0,1 - 1,0 μm und einer maximalen Durchmesserlänge von > 1 μm bestimmt.
Die Proben wurden mit einer Oxid-Poliersuspension mechanisch präpariert. Die Bestimmung der maximalen Durchmesserlängen erfolgte mit einem Feldemissionsrasterelektronenmikroskop (Zeiss Merlin) mit B2D4-Detektor (pneumatisch betriebener Detektor für Feldemissions-Rasterelektronenmikroskop) bei einer Vergrößerung von 1000:1 und einer Beschleunigungsspannung von 10 kV.
Die Ergebnisse für Partikel mit einer maximalen Durchmesserlänge von 0,1-1.0 μm sind in Tabelle 4 dargestellt:

Tabelle 4

| Legierung | Dicke | Phasenanzahl (max. Durchmesserlänge 0,1-1.0 $\mu$m)/mm$^2$ |
|---|---|---|
| A | 12 $\mu$m | $2 \times 10^3$ |
| A | 20 $\mu$m | $4 \times 10^3$ |
| B | 9 $\mu$m | $0,6 \times 10^3$ |
| C (Vergleichszusammensetzung) | 12 $\mu$m | $25 \times 10^3$ |
| C (Vergleichszusammensetzung) | 9 $\mu$m | $35 \times 10^3$ |

Die Ergebnisse für Partikel mit einer Durchmesserlänge > 1.0 $\mu$m sind in Tabelle 5 dargestellt:

Tabelle 5

| Legierung | Dicke | Phasenanzahl (max. Durchmesserlänge > 1.0 $\mu$m)/mm$^2$ |
|---|---|---|
| A | 12 $\mu$m | $2 \times 10^3$ |
| A | 20 $\mu$m | $3 \times 10^3$ |
| B | 9 $\mu$m | $0,2 \times 10^3$ |
| C (Vergleichszusammensetzung) | 12 $\mu$m | $22 \times 10^3$ |
| C (Vergleichszusammensetzung) | 9 $\mu$m | $24 \times 10^3$ |

**Patentansprüche**

1. Batterieelektrodenfolie umfassend eine Aluminiumlegierung,

    wobei die Aluminiumlegierung die folgende Zusammensetzung in Gew.-% aufweist:

    Si:          0,01 - 0,15 Gew.-%,
    Fe:          0,02 - 0,4 Gew.-%,
    Cu:          $\leq$ 0,08 Gew.-%
    Mn:          $\leq$ 0,03 Gew.-%,
    Mg:          $\leq$ 0,03 Gew.-%,
    Cr:          $\leq$ 0,01 Gew.-%
    Ti:          0,005 - 0,03 Gew.-%

    wobei die Aluminiumlegierung Verunreinigungen jeweils bis maximal 0,05 %, insgesamt bis maximal 0,15 % aufweisen kann,
    wobei die verbleibenden Gew. % Aluminium sind,
    wobei der Anteil an Aluminium jedoch mindestens 99,35 Gew.-% sein muss;
    wobei die Batterieelektrodenfolie intermetallische Phasen einer Durchmesserlänge von 0,1 bis 1,0 $\mu$m mit einer Dichte von mindestens 100 Partikeln/mm$^2$ und einer Dichte $\leq$ 9500 Partikeln/mm$^2$ aufweist, und
    wobei die Durchmesserlänge der intermetallischen Phasen und deren Dichte mit Hilfe eines Feldemissionsrasterelektronenmikroskops bei einer Vergrößerung von 1000:1 und einer Beschleunigungsspannung von 10 kV bestimmt wird.

2. Batterieelektrodenfolie gemäß Anspruch 1, wobei die Batterieelektrodenfolie eine elektrische Mindestleitfähigkeit von 56 % bis 63 % IACS aufweist; und/oder
    wobei die Batterieelektrodenfolie eine Zugfestigkeit (in Walzrichtung und quer zur Walzrichtung) Rm > 165 MPa aufweist.

3. Batterieelektrodenfolie gemäß einem der vorhergehenden Ansprüche, wobei die Batterieelektrodenfolie eine Oberflächenrauhigkeit Ra von 0,07 bis 0,22 $\mu$m auf beiden Seiten aufweist, bevorzugt
    wobei der Unterschied der Oberflächenrauhigkeit Ra auf beiden Seiten der Batterieelektrodenfolie maximal 0,03

μm beträgt.

**4.** Batterieelektrodenfolie gemäß einem der vorhergehenden Ansprüche, wobei die Batterieelektrodenfolie eine Kohlenstoffbelegung von < 5 mg/m2 aufweist.

**5.** Batterieelektrodenfolie gemäß einem der vorhergehenden Ansprüche, wobei die Oberflächenspannung der Batterieelektrodenfolie > 30 dyn/cm beträgt, bevorzugt wobei die Oberflächenspannung der Batterieelektrodenfolie > 32 dyn/cm beträgt.

**6.** Batterieelektrodenfolie gemäß einem der vorhergehenden Ansprüche,
wobei die Batterieelektrodenfolie eine Dicke von 8 bis 20 μm, vorzugsweise von 12 μm aufweist.

**7.** Batterieelektrodenfolie gemäß einem der vorhergehenden Ansprüche,
wobei die Batterieelektrodenfolie, insbesondere bei einer Dicke von 12μm folgende mechanische Eigenschaften aufweist:

| | |
|---|---|
| Rm (in Walzrichtung): | $\geq$ 165 MPa, |
| Rm (quer zur Walzrichtung): | $\geq$ 165 MPa, |
| Rp0.2 (in Walzrichtung): | $\geq$ 110 MPa, |
| A100 (in Walzrichtung): | $\geq$ 1,0 %, |

**8.** Verwendung einer Batterieelektrodenfolie gemäß einem der Ansprüche 1 bis 7 als Stromableiterfolie, insbesondere zur Herstellung eines Akkumulators, insbesondere eines eines Lithium-Ionen-Akkumulators.

**9.** Akkumulator, insbesondere Lithium-Ionen-Akkumulator, mit einem Stromableiter aus einer Batterieelektrodenfolie gemäß einem der Ansprüche 1 bis 7.

**Claims**

**1.** Battery electrode foil comprising an aluminum alloy,

wherein the aluminum alloy has the following composition in weight percent:

| | |
|---|---|
| Si: | 0.01 - 0.15 wt.-%, |
| Fe: | 0.02 - 0.4 wt.-%, |
| Cu: | $\leq$ 0.08 wt.-% |
| Mn: | $\leq$ 0.03 wt.-%, |
| Mg: | $\leq$ 0.03 wt.-%, |
| Cr: | $\leq$ 0.01 wt.-% |
| Ti: | 0.005 - 0.03 wt.-% |

wherein the aluminum alloy may contain impurities of up to a maximum of 0.05 % in each case, and in total up to a maximum of 0.15 %,
wherein the remaining wt.-% are aluminum,
wherein the aluminum content must be at least 99.35 wt.-%;
wherein the battery electrode foil has intermetallic phases of a diameter length of 0.1 to 1.0 μm with a density of at least 100 particles/mm$^2$ and a density $\leq$ 9500 particles/mm$^2$, and
wherein the diameter length of the intermetallic phases and their density are determined using a field emission scanning electron microscope at a magnification of 1000:1 and an acceleration voltage of 10 kV.

**2.** The battery electrode foil according to claim 1, wherein the battery electrode foil has a minimum electrical conductivity of 56% to 63% TAGS; and/or
wherein the battery electrode foil has a tensile strength (in the rolling direction and transverse to the rolling direction) Rm > 165 MPa.

3. The battery electrode foil according to any one of the preceding claims, wherein the battery electrode foil has a surface roughness Ra of 0.07 to 0.22 $\mu$m on both sides, preferably
wherein the difference in surface roughness Ra on both sides of the battery electrode foil is at most 0.03 $\mu$m.

4. The battery electrode foil according to any one of the preceding claims, wherein the battery electrode foil has a carbon coverage of < 5 mg/m2.

5. The battery electrode foil according to any one of the preceding claims, wherein the surface tension of the battery electrode foil is > 30 dyn/cm, preferably wherein the surface tension of the battery electrode foil is > 32 dyn/cm.

6. The battery electrode foil according to any one of the preceding claims,
wherein the battery electrode foil has a thickness of 8 to 20 $\mu$m, preferably 12 $\mu$m.

7. The battery electrode foil according to any one of the preceding claims,
wherein the battery electrode foil, in particular at a thickness of 12 $\mu$m, has the following mechanical properties:

| | |
|---|---|
| Rm (in the rolling direction): | $\geq$ 165 MPa, |
| Rm (transverse to the rolling direction) : | $\geq$ 165 MPa, |
| Rp0.2 (in the rolling direction): | $\geq$ 110 MPa, |
| A100 (in rolling direction): | $\geq$ 1.0 %. |

8. Use of a battery electrode foil according to any one of claims 1 to 7 as a current collector foil, in particular for manufacturing a rechargeable battery, in particular one of a lithium-ion rechargeable battery.

9. An accumulator, in particular a lithium-ion accumulator, having a current drain made of a battery electrode foil according to any one of claims 1 to 7.

**Revendications**

1. Feuille d'électrode de batterie comprenant un alliage d'aluminium,

l'alliage d'aluminium présentant la composition suivante en % en poids :

| | |
|---|---|
| Si : | 0,01 à 0,15 % en poids, |
| Fe : | 0,02 à 0,4 % en poids, |
| Cu : | $\leq$ 0,08 % en poids |
| Mn : | $\leq$ 0,03 % en poids, |
| Mg : | $\leq$ 0,03 % en poids, |
| Cr : | $\leq$ 0,01 % en poids |
| Ti : | 0,005 à 0,03 % en poids |

l'alliage d'aluminium pouvant présenter des impuretés respectivement jusqu'à au maximum 0,05 %, au total jusqu'à au maximum 0,15 %,
les % en poids restants étant de l'aluminium,
la proportion en aluminium devant être pourtant d'au moins 99,35 % en poids ;
la feuille d'électrode de batterie présentant des phases intermétalliques avec une longueur du diamètre de 0,1 à 1 ,0 $\mu$m avec une densité d'au moins 100 particules/mm$^2$ e t une densité $\leq$ 9500 particules/mm$^2$, et dans laquelle la longueur du diamètre des phases intermétalliques e t leur densité ont été déterminées à l'aide d'un micros cope électronique à balayage à émission de champ pour un a grandissement de 1000 : 1 et une tension d'accélération de 10 kV.

2. Feuille d'électrode de batterie selon la revendication 1,

la feuille d'électrode de batterie présentant une conductivité électrique minimale de 56 % à 63 % IACS ; et/ou

la feuille d'électrode de batterie présentant une résistance à la traction (dans le sens du laminage et perpendiculairement au sens du laminage) Rm > 165 MPa.

3. Feuille d'électrode de batterie selon l'une des revendications précédentes, la feuille d'électrode de batterie présentant une rugosité de surface Ra de 0,07 à 0,22 $\mu$m sur les deux faces, de préférence, dans laquelle la différence de rugosité de surface Ra sur les deux faces de la feuille d'électrode de batterie est d'au maximum 0,03 $\mu$m.

4. Feuille d'électrode de batterie selon l'une des revendications précédentes, la feuille d'électrode de batterie présentant un revêtement de carbone $\leq$ 5 mg/m2.

5. Feuille d'électrode de batterie selon l'une des revendications précédentes, dans laquelle la tension superficielle de la feuille d'électrode de batterie est > 30 dyn/cm, de préférence dans laquelle la tension superficielle de la feuille d'électrode de batterie est > 32 dyn/cm.

6. Feuille d'électrode de batterie selon l'une des revendications précédentes, la feuille d'électrode de batterie présentant une épaisseur de 8 à 20 $\mu$m, de préférence de 12 $\mu$m.

7. Feuille d'électrode de batterie selon l'une des revendications précédentes, la feuille d'électrode de batterie présentant, en particulier, pour une épaisseur de 12 $\mu$m, les propriétés mécaniques suivantes :

| | |
|---|---|
| Rm (dans le sens de laminage) : | $\geq$ 165 MPa, |
| Rm (perpendiculairement au sens de laminage) : | $\geq$ 165 MPa, |
| Rp0,2 (dans le sens de laminage) : | $\geq$ 110 MPa, |
| A100 (dans le sens de laminage) : | $\geq$ 1,0 %, |

8. Utilisation d'une feuille d'électrode de batterie selon l'une des revendications 1 à 7 en tant que feuille de dérivation de courant, en particulier pour la fabrication d'un accumulateur, notamment, un accumulateur à ions lithium.

9. Accumulateur, en particulier accumulateur à ions lithium, pourvu d'un dérivateur de courant à base d'une feuille d'électrode de batterie selon l'une des revendications 1 à 7.

B          H          W

K₁          Kₓ          Kₓ₊₁          K_N

Fig. 1

EP 3 714 077 B1

Fig. 2

Fig. 3

Fig. 4a

Fig. 4b

Fig. 5a

Fig. 5b

EP 3 714 077 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106929713 A
- CN 105063520 A